# EUROPÄISCHE PATENTSCHRIFT

(11) **EP 2 026 328 B1**
(45) Veröffentlichungstag und Bekanntmachung des Hinweises auf die Patenterteilung: **19.03.2014**
(21) Anmeldenummer: 08013260.8
(22) Anmeldetag: 23.07.2008
(51) Int. Cl.: G10L 15/22, G01C 21/36, B60R 16/037

(54) **Verfahren zur multimodalen Bedienung mindestens eines Gerätes in einem Kraftfahrzeug**
Method for multimodal control of at least one device in a motor vehicle
Procédé de commande multimodale d'au moins un appareil dans un véhicule automobile

(30) Priorität: 09.08.2007 DE 102007037567
(43) Veröffentlichungstag der Anmeldung: 18.02.2009
(73) Patentinhaber: Volkswagen Aktiengesellschaft, 38440 Wolfsburg (DE)
(72) Erfinder: Bohnenberger, Thorsten, 38122 Braunschweig (DE); Fesefeldt, Martin, 30559 Hannover (DE); Meyer, Oliver, 10629 Berlin (DE); Schulz, Stefan, 13189 Berlin (DE); Hofmann, Martin, 10961 Berlin (DE); Lemke, Katja, 38124 Braunschweig (DE); Mehrnaz, Goldeh, 10825 Berlin (DE)

(56) Entgegenhaltungen:
- EP-A- 0 935 123
- WO-A-02/103678
- DE-A1-102005 007 317
- DE-C1- 19 533 541
- US-A- 4 866 778
- US-A1- 2003 014 261

## Beschreibung

Die Erfindung betrifft ein Verfahren mit den im Oberbegriff des Anspruchs 1 genannten Merkmalen.

Das automobile Umfeld erfordert noch eher multimodale Benutzerschnittstellen als beispielsweise die Mensch-Computer-Kommunikation am heimischen Rechner. Während einer Autofahrt ist es besonders der visuelle Sinneskanal des Fahrers, der durch das Fahren selbst belastet. Werden nun weitere Informationen, wie zum Beispiel die Routeninformationen des Navigationssystems ebenfalls über eine visuelle Ausgabe dargestellt, birgt dies ein nicht zu unterschätzendes Gefahrenpotenzial. Wenn der Fahrer in einer heiklen Situation den Blick vom Verkehrsgeschehen abwendet besteht eine erhöhte Gefahr der visuellen Wahrnehmungsüberforderung. Demnach kann es passieren, dass der Fahrer die Information aufgrund der verstärkten visuellen Modalität aus dem Fahrgeschehen und beispielsweise der Routeninformationen des Navigationssystems nicht aufnehmen kann. Multimodale Dialogsysteme bieten hier die Möglichkeit einer situationsgerechten und sicheren Kommunikation.

Wünschenswert ist also eine Verknüpfung von Sprachdialog und manueller Bedienung der visuellen Ausgaben, wobei die manuelle Bedienung unter den oben genannten Sicherheitsaspekten nur einen geringen Zeitraum der Kommunikation in Anspruch nehmen soll.

Generelle Voraussetzungen sind ein Verfahren zur Erkennung von Sprachkommandos, ein zugehöriges Spracherkennungssystem und eine Verfahren zur Steuerung einer Anzeigeeinheit sowie die zugehörige bedienbare Anzeigeeinheit.

Ein Verfahren und eine Vorrichtung zur Erkennung von Sprachkommandos ist aus der DE 195 33 541 C1 bereits bekannt. Dieses Verfahren ermöglicht die automatische Steuerung eines oder mehrerer Geräte durch Sprachkommandos oder per Sprachdialog im Echtzeitbetrieb. Die Patentschrift offenbart ferner eine Vorrichtung, bei welcher eine Spracheingabe-/-ausgabeeinheit über eine Sprachsignalvorverarbeitungseinheit mit einer Spracherkennungseinheit verbunden ist.

Bekannt ist ferner eine Vorrichtung und ein Verfahren, die in der Offenlegungsschrift DE 10 2005 007 317 A1 beschrieben wird und die dazu dient den Benutzer zur Anwendung einer Sprachbedienung anzuregen, wobei nicht-sprachliche Eingaben ebenfalls erlaubt sind.

Aus der US 2003/0014261 A1 ist ein Informationssystem, insbesondere ein Navigationssystem, bekannt, welches eine Eingabemethode für von dem Navigationssystem verarbeitbare Informationen vorschlägt, bei der in einer Liste angeordnete Schlüsselworte über eine Tastenauswahl und/oder über Sprachbefehle ausgewählt und schrittweise bis zur Auswahl einer Zieladresse verdichtet werden. Eine solche schrittweise Eingabe anhand von Schlüsselwörtern ist jedoch recht mühsam und erfordert eine relativ große Anzahl von Eingabeschritten.

Im Mittelpunkt dieser Patentanmeldungen steht die Verbesserung des Sprachdialogs und die Erkennung der Sprache.

Obwohl die Spracherkennung inzwischen stark weiterentwickelt wurde, bestehen insbesondere im Kraftfahrzeugbereich bestimmte Begrenzungen hinsichtlich der zur Verfügung stehenden Speicher- und Verarbeitungsressourcen zur Erkennung der Sprache, da die vorhandenen Speicher und Verarbeitungsprozessoren zur Steuerung des Kraftfahrzeuges für diverse andere Steuer- und Regelvorgänge des Kraftfahrzeuges selbst benötigt werden und je nach Situation gegebenenfalls sogar besetzt sind.

Anhand zweier Beispiele an einem Display für ein Navigationssystem und einem Display für eine Musikauswahlanzeige soll die bekannte zu verbessernde, als nachteilig empfundenen bisherige Vorgehensweise noch näher erläutert werden.

Beispielsweise erfolgt in einem ersten bekannten Anwendungsbeispiel die Navigationszieleingabe bei Fahrzeug-Navigationssystemen zurzeit sequentiell. Der Fahrer gibt per Sprache oder manuell die drei Informationen Ort, Straße und Hausnummer nacheinander ein. Diese Form der Navigationszieleingabe ist vergleichsweise langwierig und stellt während der Fahrt - zwar nicht erlaubt, aber gängige Praxis - ein Sicherheitsrisiko dar.

In einem anderen Anwendungsbeispiel im Bereich von akustischen Anwendungen im Kraftfahrzeug ist durch die wachsende Größe, der im Fahrzeug zur Verfügung stehenden Musikdatenbanken - typischerweise von mp3-playern, von CDs, von iPODs oder anderen externen, ins Fahrzeug mitgebrachten Speichermedien - eine herkömmliche manuelle Musikauswahl mit Suche in hierarchischen Verzeichnissen durch Bedienung per haptischem Eingabegerät oder Command-and-Control basierter Musikauswahl per Sprache, wie "Start", "Stop", "Titel 7", "nächster Titel" etc. nicht mehr praktikabel.

Die der vorliegenden Erfindung zugrundeliegende Problematik besteht also darin, ein Verfahren und ein zugehöriges System anzubieten, dass die Vorteile einer multimodalen Bedienung aus Sprachbedienung und einer manuellen Bedienung ausnutzen kann und dem Benutzer die Ausführung einer Interaktion per Sprache und manueller Bedienung anbietet.

Die Erfindung geht von einem Verfahren mit folgenden Merkmalen nach dem Oberbegriff des Anspruchs 1 aus, welches zur automatischen Ansteuerung eines Gerätes dient. Das anzusteuernde Gerät umfasst eine Anzeigevorrichtung und ein Spracherkennungsmodul, wobei das mindestens eine Spracherkennungsmodul durch einen jeweils sprecherunabhängigen Isoliertworterkenner oder Verbundworterkenner mittels mindestens einem, einseitigen an das Gerät gerichteten Sprachkommandos oder einem zweiseitigen Sprachdialog zwischen einem Sprecher und dem Spracherkennungsmodul eine, in einem Speichermedium abgelegte, Mehrwort-Information gemäß seiner Erkennungswahrscheinlichkeit identifiziert und diese Mehrwort-Information in der Anzeigevorrichtung des Systems visualisiert.

Die Aufgabe wird in Verbindung mit den Merkmalen des Oberbegriffs des Patentanspruchs 1 dadurch gelöst, dass die Mehrwort-Information in einer jeweils ein Wort oder eine Wortkombination aufnehmenden, listenartigen Darstellung mit mehreren Spalten und/oder Zeilen in der Anzeigevorrichtung visualisiert wird und diese listenartige Darstellung wiederum durch Sprachkommandos oder Sprachdialog und/oder durch eine manuelle Bedienung innerhalb mindestens einer Spalte der listenartigen Darstellung ausgewählt oder korrigiert wird, falls die in den Spalten oder Zeilen abgelegte Mehrwort-Information nicht der gewünschten Information entspricht.

In weiterer Ausgestaltung der Erfindung weist das Verfahren folgende weitere bevorzugte Merkmale auf.

Die Anzeigevorrichtung ermöglicht die Umschaltung der Visualisierung in Spalten oder Zeilen.

Das Verfahren ermöglicht, dass die in der listenartigen Darstellung erzeugten Spalten oder Zeilen in der Anzeigevorrichtung hierarchisch angelegt sind und visualisiert werden, wobei eine nächste Spalte oder Zeile, wenn gewünscht, eine die Informationen der nächsten Spalte oder Zeile betreffende hierarchisch darunter liegende Untergliederung der vorhergehenden Spalte anzeigt.

Dabei ist das Spracherkennungsmodul beispielsweise in ein Navigationssystems integriert und ermöglicht die Spracherkennung der Mehrwort-Informationen mit Zieleingaben für das Navigationssystem, wie Ort und/oder Strasse und/oder Hausnummer, die dann auf der Basis der auf dem Speichermedium erkannten Mehrwort-Information als jeweils ein Wort oder eine Wortkombination in der listenartigen Darstellung spaltenweise oder zeilenweise visualisiert wird.

Das Spracherkennungsmodul kann in einer weiteren bevorzugten Ausgestaltung eine Musikdatenbank sein, der ebenfalls eine Mehrwort-Informationen mit Interpret und/oder Album und/oder Titel und/öder Genre eingesprochen werden kann, wobei die Informationen, die dann ebenfalls auf der Basis der auf dem Speichermedium erkannten Mehrwort-Information jeweils ein Wort oder eine Wortkombination sein können, in der listenartigen Darstellung spaltenweise oder zeilenweise visualisiert werden.

Bevorzugt ist in einer ersten Ausführungsvariante, dass innerhalb des Verfahrens eine Korrektur über eine in einer Spalte oder Zeile erzeugte Korrekturliste durch eine manuelle Bedienung der Anzeigevorrichtung über der Anzeigevorrichtung zugeordnete Schalter und/oder Tasten und/oder Drehknöpfe vorgenommen wird.

In einer zweiten Ausführungsvariante wird eine Korrektur über eine in einer Spalte oder Zeile erzeugte Korrekturliste durch eine manuelle Touch-Bedienung, der dann als Touch-Screen ausgebildeten Anzeigevorrichtung, vorgenommen.

In einer dritten Ausführungsvariante wird eine Korrektur über eine in einer Spalte oder Zeile erzeugte Korrekturliste wiederum durch Sprachkommandos oder Sprachdialog vorgenommen.

Das Verfahren zeichnet sich insbesondere dadurch aus, dass eine, in einer Spalte oder Zeile erzeugte Korrekturliste eine Liste ["n-best-Korrekturliste"] ist, die alle weiteren vom Spracherkennungsmodul mit der nächst höchsten Erkennungswahrscheinlichkeit identifizierte Informationen als Wort oder als eine Wortkombination anzeigt.

Nach Auswahl der richtigen Mehrwort-Information erfolgt die Übernahme der Mehrwort-Information in die zu startende Routenplanung des Navigationssystems oder aus der Musikdatenbank in eine Abspielliste des zu startenden Abspielgerätes, beispielsweise eines CD-Players oder dergleichen.

Schließlich ermöglicht das Verfahren, dass nach Korrektur einer Information einer in einer Spalte oder Zeile erzeugten Korrekturliste, beispielsweise über die ["n-best-Korrekturliste"], die hierarchisch einer Spalte oder Zeile übergeordnet ist, dass die zugehörige Mehrwort-Information in der jeweils abgelegten Art als Wort oder Wortkombination in der untergeordneten Spalte oder Zeile automatisch mitwechselt.

Zudem wird bei einer Korrektur, die über die in einer der Spalten oder Zeile erzeugte Korrekturliste durch einen Bedienhandlung nach mindestens einem der Ansprüche 5 bis 7 vorgenommen wird, eine Berichtigung der Mehrwort-Information in der jeweils abgelegten Art als Wort oder Wortkombination vorgenommen.

Das Verfahren ist für alle Anwendungen im Kraftfahrzeug anwendbar und ist nicht auf die beispielhaft beschriebenen Navigationssysteme oder eine Musikdatenbank beschränkt. Anwendungen wie Telefon, Radio, Interneteingabe, TV-Auswahl oder dergleichen sind ebenfalls mit dem erfindungsgemäßen Verfahren ausführbar.

Weitere bevorzugte Ausgestaltungen der Erfindung ergeben sich aus den übrigen, in den Unteransprüchen genannten Merkmalen.

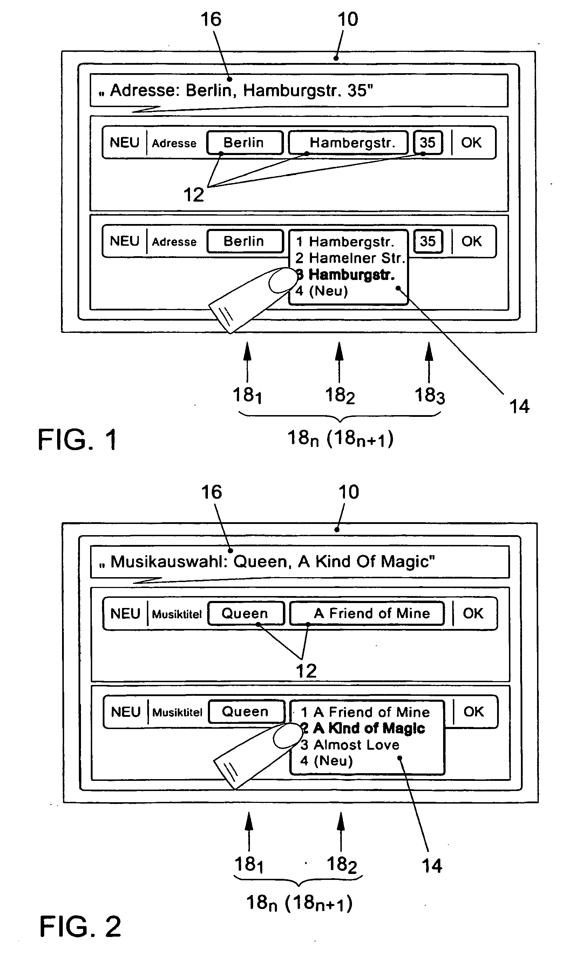

Die Erfindung wird nachfolgend anhand der zugehörigen Figuren 1 und 2 näher erläutert.
- Figur 1: verdeutlicht das Verfahren anhand einer Anzeigevorrichtung eines Navigationssystems und
- Figur 2: verdeutlicht das Verfahren anhand einer in einer Anzeigevorrichtung aufrufbaren Musikdatenbank.

Figur 1 verdeutlicht das Verfahren anhand der Anzeigevorrichtung 10, die beispielsweise als Display in der Mittelkonsole eines Kraftfahrzeuges ausgeführt ist. Der Anzeigevorrichtung 10 ist ein Spracherkennungsmodul zugeordnet, welches in Figur 1 nicht dargestellt ist.

Das Spracherkennungsmodul weist einen sprecherunabhängigen Isoliertworterkenner oder Verbundworterkenner auf, mittels dem Sprachkommandos im einseitigen Monolog des Sprechers an das Spracherkennungsmodul oder im zweiseitigen Sprachdialog des Sprechers mit dem Spracherkennungsmodul einsprechbar sind.

In einem nicht näher dargestellten Speichermedium sind von vornherein beziehungsweise werden erst durch den Benutzer die zu erwartenden Mehrwort-Informationen 16 in einem ersten Schritte abgelegt, so dass in einem zweiten Schritt, gemäß einer Erkennungswahrscheinlichkeit des sprecherunabhängigen Isoliertworterkenners oder Verbundworterkenners des Spracherkennungsmoduls, eine Mehrwort-Information 16 identifiziert wird und diese Mehrwort-Information 16 in einem dritten Schritt in der Anzeigevorrichtung 10 des Systems visualisiert wird.

Die Figuren 1 und 2 erläutern die Erfindung in einer spaltenweisen Darstellung/Visualisierung der Informationen einer Anzeigevorrichtung 10. Die nachfolgende Beschreibung ist analog auf die zweite Möglichkeit einer zeilenweisen Darstellung übertragbar.

Eine eingesprochene Mehrwort-Information 16 ist in Figur 1 in der Anzeigevorrichtung 10 beispielhaft dargestellt. Dabei handelt sich beispielsweise um eine im Wesentlichen ohne Sprachpause eingesprochene Zieladresse, die aus den Informationen "Berlin, Hamburgstraße, Nummer 35" besteht.

Diese gemäß seiner Erkennungswahrscheinlichkeit identifizierte Mehrwort-Information 16 wird gemäß Figur 1 in mehreren Spalten 18₁, 18₂, 18₃ in der Anzeigevorrichtung 10 visualisiert, wonach diese listenartige Darstellung 12 wiederum durch Sprachkommandos oder Sprachdialog und/oder durch eine manuelle Bedienung (nicht näher dargestellt) innerhalb mindestens einer Spalte 18₁, 18₂, 18₃ der listenartigen Darstellung 12 ausgewählt und korrigiert werden kann, falls die Mehrwort-Information 16 in einer mindestens einer der Spalte 18₁, 18₂, 18₃ nicht der gewünschten Information entspricht.

Figur 1 zeigt, dass die Mehrwort-Information 16 in den Spalten 18₁, 18₂, 18₃ der Anzeigevorrichtung 10 hierarchisch angelegt ist und entsprechend visualisiert wird, so dass die Spalte 18₂ eine Untergliederung mit einer untergeordneten Hierarchie der Spalte 18₁ beziehungsweise die 18₃ eine Untergliederung mit einer weiteren untergeordneten Hierarchie der Spalte 18₂ darstellt.

Der Name der Straße stellt somit eine untergeordneten Hierarchie innerhalb des entsprechenden Ortes und die Hausnummer wiederum eine weitere untergeordnete Hierarchie der jeweiligen Straße dar.

Wird nun nach der jeweiligen Visualisierung der Mehrwort-Information 16 festgestellt" dass, wie in Figur 1 dargestellt, das Spracherkennungsmodul "Hambergstraße" statt "Hamburgstraße" identifiziert, kann diese Eingabe in der Spalte 18₂ entsprechend korrigiert werden. Dazu dienen der Anzeigevorrichtung 10 zugeordnete (nicht dargestellte) Schalter und/oder Tasten und/oder Drehknöpfe, mittels denen eine Korrektur manuell vorgenommen werden kann.

Wie in Figur 1 dargestellt, ist die Korrektur durch eine manuelle Touchbedienung, der dann als Touchscreen ausgebildeten Anzeigevorrichtung 10 möglich, indem ein Finger des Benutzers in den Bereich der Spalte 18₂ tippt, wonach eine Korrekturliste vorzugsweise eine sogenannte n-best-Korrekturliste geöffnet wird, die den Teil der Mehrwort-Information 16, welcher wiederum auch als Wort oder als Wortkombination abgelegt sein kann, mit der nächsthöchsten identifizierten Erkennungswahrscheinlichkeit anzeigt.

Durch Tippen auf die gewünschte Information, hier beispielsweise "Hamburgstraße", wird die Zieladresse, die gemäß der Spracheingabe gewünscht worden war, korrigiert.

Abschließend erfolgt dann eine Auswahl der richtigen Mehrwort-Information 16 durch einfaches Drücken einer Bedientaste "Ok" gemäß Figur 1, so dass die gewünschte multimodal durchgeführte Zieleingabe in das Navigationssystem einer Routenplanung oder dergleichen überführt werden kann.

Ist beispielsweise eine in der Hierarchie übergeordnete Spalte 18₁ durch das Spracherkennungsmodul gemäß der Spracheingabe nicht richtig identifiziert worden und erfolgt hier durch die eben beschriebene Art und Weise über die Korrekturliste 14 eine Änderung beispielsweise der Bezeichnung der Stadt, so erfolgt automatisch in den hierarchisch untergeordneten Spalten 18₂, 18₃ eine Veränderung der dort möglichen, gemäß der nächsthöchsten Erkennungswahrscheinlichkeit der durchgeführten Spracheingabe identifizierten Information.

Figur 2 verdeutlicht das Verfahren anhand der Auswahl von Musik in einer Musikdatenbank. Anhand der Anzeigevorrichtung 10 wird wiederum verdeutlicht, dass zunächst das Einsprechen einer Mehrwort-Information 16 über ein Spracherkennungsmodul möglich ist, so dass die in einem Speichermedium abgelegte Mehrwort-Information 16 gemäß seiner Erkennungswahrscheinlichkeit identifiziert werden kann und diese Mehrwortinformation 16 in der Anzeigevorrichtung 10 des Systems visualisiert wird.

Gemäß Figur 2 sind hier beispielsweise nur zwei Spalten 18₁, 18₂ vorhanden, auf denen beispielsweise in einer übergeordneten Spalte 18₁ ein Interpret und in einer untergeordneten Spalte 18₂ ein Titel des jeweiligen Interpreten angezeigt wird, der gemäß seiner Erkennungswahrscheinlichkeit vom Spracherkennungsmodul identifiziert worden ist.

Beispielsweise wurde dem Spracherkennungsmodul der Interpret "Queen" und der Titel "A Kind of Magic" eingesprochen, jedoch in Spalte 18₂ der Titel "A Friend of Mine" erkannt und visualisiert, so kann der Benutzer wiederum durch die bereits zu Figur 1 beschriebenen, verschiedenen Möglichkeiten - nach Anspruch 5 bis 7 - eine Korrektur vornehmen.

In Figur 2 dargestellt ist die Ausführung, bei welcher der Anwender innerhalb der hierarchisch untergeordneten Spalte 18₂ eine dort erzeugte Korrekturliste, vorzugsweise "n-best-Korrekturliste" durch eine manuelle Touch-Bedienung, der als Touchscreen ausgebildeten Anzeigevorrichtung 10 vornimmt.

Hier kann der Bediener dann den gewünschten, ebenfalls visualisierten Titel "A Kind of Magic" aus der "n-best-Korrekturliste" auswählen. Durch das Drücken der OK-Taste wird die korrigierte Mehrwort-Information 16 einem Abspielgerät, beispielsweise einem Musikplayer oder dergleichen, zum sofortigen Start zugeführt oder in einer später zu startenden Playlist abgelegt.

Gemäß der Erläuterung zu Figur 1, ist beispielsweise bei dem Verfahren erfindungsgemäß, dass falls die Visualisierung einer falsch identifizierten Mehrwort-Information 16 in Spalte 18₁ erfolgt, bei der beispielsweise der Interpret "Queen" falsch identifiziert und visualisiert wurde, mit Wechsel dieses Interpreten in der hierarchisch, übergeordneten Spalte 18₁ gleichzeitig die in der hierarchisch, untergeordneten Spalte 18₂ möglichen, gemäß der sprachlichen Erkennungswahrscheinlichkeit identifizierten und danach visualisierten Titel automatisch wechseln.

Schließlich sei erwähnt, dass wie bei der beschriebenen Anwendung der Figur 1, wie auch in der Anwendung Figur 2, jedoch in beiden Figuren nicht darstellbar, die manuelle oder sprachliche Berichtigung einer Information nach Anspruch nach 5 bis 7, wie beispielsweise eines Ortes und/oder einer Strasse und/oder einer Hausnummer nach Figur 1 oder eines Interpreten und/oder eines Albums und/oder eines Titels und/oder eines Genre nach Figur 2 zu einem Abgleich des Spracherkennungsmoduls führt, da das Spracherkennungsmodul dadurch feststellt, dass gemäß der vorhergehenden Spracheingabe mittels Sprachkommando oder zweiseitigen Sprachdialog eine andere Information gewünscht war, so dass diese nun vom Bediener korrigierte Information dem Spracherkennungsmodul zugeführt und dort entsprechend berichtigt abgespeichert wird.

Das Verfahren ermöglicht somit eine sprachliche Informationseingabe zu Reduzierung visueller durchzuführender Handlungen, wodurch die Aufmerksamkeit des Fahrers nicht vom Verkehrsgeschehen abgelenkt wird, ferner werden die Informationen entsprechend so visualisiert, dass nur noch wenige weitere manuelle und/oder wiederum sprachliche Bedienhandlungen notwendig sind, um die entsprechende gewünschte Information eingeben zu können, falls überhaupt eine Berichtigung notwendig ist. Die Kombination der sprachlichen und manuellen beziehungsweise wiederum sprachlichen - multimodalen - Bedienbarkeit mit der dazwischen liegenden bedienerfreundlichen Visualisierung stellt einen Wesentlichen Vorteil der Erfindung dar.

### Bezugszeichenliste

- 10: Anzeigevorrichtung
- 12: Liste mit n-Spalten
- 14: Korrekturliste
- 16: Information [Mehrwort-Information]
- 18ₙ: Spalte n
- 18ₙ₊₁: untergeordnete Spalte n+1

## Patentansprüche

1. Verfahren zur automatischen Ansteuerung eines Gerätes, welches ein System aus einer Anzeigevorrichtung (10) und einem Spracherkennungsmodul bildet, wobei das mindestens eine Spracherkennungsmodul durch einen jeweils sprecherunabhängigen Isoliertworterkenner oder Verbundworterkenner mittels mindestens einem, einseitigen an das Gerät gerichteten Sprachkommandos oder einem zweiseitigen Sprachdialog zwischen einem Sprecher und dem Spracherkennungsmodul eine, in einem Speichermedium abgelegte Mehrwort-Information (16), gemäß seiner Erkennungswahrscheinlichkeit identifiziert und diese Mehrwort-Information (16) in der Anzeigevorrichtung des Systems visualisiert,
**dadurch gekennzeichnet, dass**
die Mehrwort-Information (16) in einer jeweils ein Wort oder eine Wortkombination aufnehmenden, listenartigen Darstellung (12) mit mehreren Spalten (18ₙ) oder mehreren Zeilen in der Anzeigevorrichtung (10) visualisiert wird und diese listenartige Darstellung (12) wiederum durch Sprachkommandos oder Sprachdialog und/oder durch eine manuelle Bedienung innerhalb mindestens einer Spalte (18ₙ) oder mindestens einer Zeile der listenartigen Darstellung (12) ausgewählt oder korrigiert wird, falls die Mehrwort-Information (16) nicht der gewünschten Information entspricht.

2. Verfahren nach Anspruch 1,
**dadurch gekennzeichnet, dass**
die Spalten (18ₙ) oder Zeilen in der Anzeigevorrichtung (10) hierarchisch angelegt sind und visualisiert werden, wobei eine nächste Spalte (18ₙ₊₁) oder eine nächste Zeile, wenn gewünscht, eine die Informationen (16) der nächsten Spalte (18ₙ₊₁) oder der nächsten Zeile betreffende Untergliederung der vorhergehenden Spalte (18ₙ) oder vorhergehenden Zeile anzeigt.

3. Verfahren nach Anspruch 2,
**dadurch gekennzeichnet, dass**
in das Spracherkennungsmodul eines Navigationssystems Mehrwort-Informationen (16) mit Zieleingaben wie Ort und/oder Strasse und/oder Hausnummer eingesprochen werden, die auf der Basis der auf dem Speichermedium erkannten Mehrwort-Informationen (16) in der listenartigen Darstellung (12) spaltenweise oder zeilenweise visualisiert werden.

4. Verfahren nach Anspruch 2,
**dadurch gekennzeichnet, dass**
in das Spracherkennungsmodul einer Musikdatenbank Mehrwort-Informationen (16) mit Interpret und/oder Album und/oder Titel und/oder Genre eingesprochen werden, die auf der Basis der auf dem Speichermedium erkannten Mehrwort-Informationen (16) in der listenartigen Darstellung (12) spaltenweise oder zeilenweise visualisiert werden.

5. Verfahren nach Anspruch 2,
**dadurch gekennzeichnet, dass**
eine Korrektur über eine in einer Spalte (18ₙ) oder einer Zeile erzeugte Korrekturliste (14) durch eine manuelle Bedienung der Anzeigevorrichtung (10) über der Anzeigevorrichtung (10) zugeordnete Schalter und/oder Tasten und/oder Drehknöpfe vorgenommen wird.

6. Verfahren nach Anspruch 2,
**dadurch gekennzeichnet, dass**
eine Korrektur über eine in einer Spalte (18ₙ) oder einer Zeile erzeugte Korrekturliste (14) durch eine manuelle Touch-Bedienung der als Touch-Screen ausgebildeten Anzeigevorrichtung (10) vorgenommen wird.

7. Verfahren nach Anspruch 2,
**dadurch gekennzeichnet, dass**
eine Korrektur über eine in einer Spalte (18ₙ) oder einer Zeile erzeugte Korrekturliste (14) durch Sprachkommandos oder Sprachdialog vorgenommen wird.

8. Verfahren nach einem der vorhergehenden Ansprüche,
**dadurch gekennzeichnet, dass**
die in einer Spalte (18ₙ) oder einer Zeile erzeugte Korrekturliste (14) eine Liste ["n-best-Korrekturliste"] ist, die alle weiteren vom Spracherkennungsmodul mit der nächst höchsten Erkennungswahrscheinlichkeit identifizierte Informationen als Wort oder eine Wortkombination anzeigt.

9. Verfahren nach den Ansprüchen 1 und 3 oder Ansprüchen 1 und 4,
**dadurch gekennzeichnet, dass**
durch die Auswahl der richtigen Mehrwort-Information (16) die Übernahme der Mehrwort-Information (16) in das Navigationssystem oder die Musikdatenbank durchgeführt wird.

10. Verfahren nach den Ansprüchen 1 und 3 oder Ansprüchen 1 und 4,
**dadurch gekennzeichnet, dass**
nach Korrektur einer Information durch eine, in einer Spalte (18ₙ) oder einer Zeile erzeugten Korrekturliste (14) über eine ["n-best-Korrekturliste"], die hierarchisch einer Spalte (18ₙ₊₁) oder Zeile übergeordnet ist, die zugehörige Mehrwort-Information (16) in der jeweils abgelegten Art als Wort oder Wortkombination in der untergeordneten Spalte (18ₙ₊₁) oder Zeile automatisch wechselt.

11. Verfahren nach einem der vorhergehenden Ansprüche,
**dadurch gekennzeichnet, dass**
sobald eine Korrektur über die in einer der Spalten (18ₙ) oder einer Zeile erzeugte Korrekturliste (14) durch einen Bedienhandlung nach mindestens einem der Ansprüche 5 bis 7 vorgenommen wird, eine Berichtigung der Mehrwort-Information (16) in der jeweils abgelegten Art als Wort oder Wortkombination vorgenommen wird.

## Claims

1. Method for automatically actuating an appliance that forms a system comprising a display apparatus (10) and a voice recognition module, wherein the at least one voice recognition module uses a respective speaker-independent isolated-word recognition unit or compound-word recognition unit to identify, by means of at least one unilateral voice command directed at the appliance or a bilateral voice dialogue between a speaker and the voice recognition module, a piece of multiple-word information (16) that is stored in a storage medium, on the basis of the recognition probability of said voice recognition module, and visually displays this multiple-word information (16) in the display apparatus of the system,
**characterized in that**
the multiple-word information (16) is visually displayed in the display apparatus (10) in a respective list-like presentation (12), which includes a word or a word combination, having a plurality of columns (18ₙ) or a plurality of rows, and this list-like presentation (12) is in turn selected or corrected by voice commands or voice dialogue and/or by manual control within at least one column (18ₙ) or at least one row of the list-like presentation (12) if the multiple-word information (16) does not correspond to the desired information.

2. Method according to Claim 1,
**characterized in that**
the columns (18ₙ) or rows are created and visually displayed hierarchically in the display apparatus (10), wherein a next column (18ₙ₊₁) or a next row, if required, displays a subdivision of the preceding column (18ₙ) or preceding row that relates to the information (16) in the next column (18ₙ₊₁) or the next row.

3. Method according to Claim 2,
**characterized in that**
multiple-word information (16) with destination inputs such as town and/or road and/or house number are spoken into the voice recognition module of a navigation system, said information being visually displayed in columns or rows in the list-like presentation (12) on the basis of the multiple-word information (16) recognized on the storage medium.

4. Method according to Claim 2,
**characterized in that**
multiple-word information (16) with artist and/or album and/or track and/or genre is spoken into the voice recognition module of a music database, said information being visually displayed in columns or rows in the list-like presentation (12) on the basis of the multiple-word information (16) recognized on the storage medium.

5. Method according to Claim 2,
**characterized in that**
a correction using a correction list (14) produced in a column (18ₙ) or a row is made by manual control of the display apparatus (10) using switches and/or keys and/or rotary knobs associated with the display apparatus (10).

6. Method according to Claim 2,
**characterized in that**
a correction using a correction list (14) produced in a column (18ₙ) or a row is made by manual touch control of the display apparatus (10) in the form of a touch screen.

7. Method according to Claim 2,
**characterized in that**
a correction using a correction list (14) produced in a column (18ₙ) or a row is made by voice commands or voice dialogue.

8. Method according to one of the preceding claims,
**characterized in that**
the correction list (14) produced in a column (18ₙ) or a row is a list ["n-best correction list"] that displays all further information identified by the voice recognition module with the next highest recognition probability as a word or a word combination.

9. Method according to Claims 1 and 3 or Claims 1 and 4,
**characterized in that**
the selection of the correct multiple-word information (16) transfers the multiple-word information (16) to the navigation system or the music database.

10. Method according to Claims 1 and 3 or Claims 1 and 4,
**characterized in that**
following correction of a piece of information by a correction list (14), produced in a column (18ₙ) or a row, using an ["n-best correction list"] that is hierarchically superordinate to a column (18ₙ₊₁) or row, the associated multiple-word information (16) in the respectively stored type as a word or word combination in the subordinate column (18ₙ₊₁) or row automatically changes.

11. Method according to one of the preceding claims,
**characterized in that**
as soon as a correction using the correction list (14) produced in one of the columns (18ₙ) or a row is made by a control action according to at least one of Claims 5 to 7, the multiple-word information (16) in the respective stored type as a word or a word combination is corrected.

## Revendications

1. Procédé pour la commande automatique d'un appareil qui forme un système constitué d'un dispositif d'affichage (10) et d'un module de reconnaissance vocale, dans lequel l'au moins un module de reconnaissance vocale, identifie une information à mots multiples (16) stockée sur un support de stockage en fonction de sa probabilité de reconnaissance, à l'aide d'un dispositif de reconnaissance de mots isolés ou d'un dispositif de reconnaissance de mots composés respectifs indépendants du locuteur, au moyen d'au moins une commande vocale unidirectionnelle dirigée vers l'appareil ou d'un dialogue vocal bidirectionnel entre un locuteur et le module de reconnaissance vocale, et visualise cette information à mots multiples (16) dans le dispositif d'affichage du système,
**caractérisé en ce que**
l'information à mots multiples (16) est visualisée dans le dispositif d'affichage (10) dans une représentation sous forme de liste (12) à plusieurs colonnes (18ₙ) ou plusieurs lignes comprenant respectivement un mot ou une combinaison de mots et cette représentation sous forme de liste (12) est à son tour sélectionnée ou corrigée par des commandes vocales ou par un dialogue vocal et/ou par un actionnement manuel à l'intérieur d' au moins une colonne (18ₙ) ou d'au moins une ligne de la représentation sous forme de liste (12), au cas où l'information à mots multiples (16) ne correspond pas à l'information souhaitée.

2. Procédé selon la revendication 1, **caractérisé en ce que** les colonne (18ₙ) ou les lignes sont organisées et visualisées hiérarchiquement dans le dispositif d'affichage (10), dans lequel une colonne suivante (18ₙ₊₁) ou une ligne suivante affiche, lorsque cela est souhaité, une subdivision de la colonne précédente (18ₙ) ou de la ligne précédente concernant les informations (16) de la colonne suivante (18ₙ₊₁) ou de la ligne suivante.

3. Procédé selon la revendication 2, **caractérisé en ce que** des informations à mots multiples (16) sont fournies de manière vocale dans le module de reconnaissance vocale d'un système de navigation avec des entrées cibles telles que le lieu et/ou la rue et/ou le numéro d'habitation, lesquelles informations sont visualisées sous forme de colonnes ou de lignes dans la représentation sous forme de liste (12) sur la base des informations à mots multiples (16) reconnues sur le support de stockage.

4. Procédé selon la revendication 2, **caractérisé en ce que** des informations à mots multiples (16) sont fournies de manière vocale dans le module de reconnaissance vocale d'une base de données de musique, avec l'interprète et/ou l'album et/ou le titre et/ou le genre, lesquelles informations sont visualisées sous forme de colonnes ou de lignes dans la représentation sous forme de liste (12) sur la base des informations à mots multiples (16) reconnues sur le support de stockage.

5. Procédé selon la revendication 2, **caractérisé en ce qu'**une correction est effectuée au moyen d'une liste de correction (14) générée dans une colonne (18ₙ) ou une ligne par un actionnement manuel du dispositif d'affichage (10) au moyen de commutateurs et/ou de touches et/ou de boutons associés au dispositif d'affichage (10).

6. Procédé selon la revendication 2, **caractérisé en ce qu'**une correction est effectuée au moyen d'une liste de correction (14) générée dans une colonne (18ₙ) ou une ligne par un actionnement manuel tactile du dispositif d'affichage (10) réalisé sous forme d'écran tactile.

7. Procédé selon la revendication 2, **caractérisé en ce qu'**une correction est effectuée au moyen d'une liste de correction (14) générée dans une colonne (18ₙ) ou une ligne par des commandes vocales ou un dialogue vocal.

8. Procédé selon l'une quelconque des revendications précédentes, **caractérisé en ce que** la liste de correction (14) générée dans une colonne (18ₙ) ou une ligne est une liste appelée "liste des n meilleures corrections" qui affiche sous forme de mot ou d'une combinaison de mots toutes les autres informations identifiées par le module de reconnaissance vocale avec la probabilité de reconnaissance la plus élevée suivante.

9. Procédé selon les revendications 1 et 3 ou les revendications 1 et 4, **caractérisé en ce que** l'acquisition de l'information à mots multiples (16) est réalisée dans le système de navigation ou la base de données de musique par sélection de l'information à mots multiples correcte (16).

10. Procédé selon les revendications 1 et 3 ou les revendications 1 et 4, **caractérisé en ce que**, après correction d'une information à l'aide d'une liste de correction (14) générée au moyen d'une "liste des n meilleures corrections" dans une colonne (18ₙ) ou une ligne, qui est de rang hiérarchiquement supérieur à une colonne (18ₙ₊₁) ou à une ligne, l'information à mots multiples (16) correspondante change automatiquement selon la méthode respective stockée, sous forme de mot ou de combinaison de mots dans la colonne (18ₙ₊₁) ou la ligne de rang inférieur.

11. Procédé selon l'une quelconque des revendications précédentes, **caractérisé en ce que** dès qu'une correction est effectuée par l'intermédiaire de la liste de correction (14) générée dans l'une des colonne (18ₙ) ou une ligne par une action de commande selon au moins l'une des revendication 5 à 7, une correction de l'information à mots multiples (16) est effectuée selon la méthode respective stockée sous forme de mot ou de combinaison de mots.
